(19)

Europäisches
Patentamt
European
Patent Office
Office européen
des brevets

(11) **EP 2 244 537 B1**

(12) **EUROPEAN PATENT SPECIFICATION**

(45) Date of publication and mention
of the grant of the patent:
**27.12.2017 Bulletin 2017/52**

(51) Int Cl.:
***H05B 41/292*** *(2006.01)*

(21) Application number: **10160867.7**

(22) Date of filing: **23.04.2010**

(54) **Light source lighting circuit**

Lichtquellenbeleuchtungsschaltung

Circuit d'éclairage à source lumineuse

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.04.2009 JP 2009107087**

(43) Date of publication of application:
**27.10.2010 Bulletin 2010/43**

(73) Proprietor: **Koito Manufacturing Co., Ltd.
Tokyo 108-8711 (JP)**

(72) Inventors:
 • **Tsuchiya, Toshiyuki
 Shizuoka (JP)**

 • **Ohta, Shinji
 Shizuoka (JP)**
 • **Ito, Masayasu
 Shizuoka (JP)**

(74) Representative: **Hoffmann Eitle
Patent- und Rechtsanwälte PartmbB
Arabellastraße 30
81925 München (DE)**

(56) References cited:
**US-A- 4 677 346      US-A1- 2002 109 467
US-A1- 2005 088 102      US-A1- 2005 099 142
US-A1- 2006 267 521      US-B1- 6 259 215**

**Description**

TECHNICAL FIELD

The present disclosure relates to a light source lighting circuit for carrying out a control based on information indicative of an environment of an operation.

RELATED ART

In recent years, a metal halide lamp (which will be hereinafter referred to as a discharge lamp) has been utilized, as a lighting device for a vehicle, for example, a headlamp, in place of a related-art halogen lamp having a filament. Although the discharge lamp can obtain a higher light emission efficiency and a longer lifetime as compared with the halogen lamp, it requires several tens to several hundreds V as a driving voltage. For this reason, the discharge lamp cannot be driven directly by an on-vehicle battery of 12V or 24V. Therefore, a discharge lamp lighting circuit (which is also referred to as a ballast) is required.

The discharge lamp lighting circuit includes a DC/DC converter for raising a battery voltage, a switching circuit such as an H bridge circuit for converting an output voltage of the DC/DC converter into an alternating current, a starter circuit and a control circuit for controlling the circuit blocks (for example, see Patent Document 1).

[Patent Document 1] JP-A-11-329777 Publication

The discharge lamp lighting circuit has various protecting functions against a temperature. In many cases, a circuit for detecting temperature information is provided for each of the protecting functions. With a recent enhancement in a performance of the discharge lamp lighting circuit, a type of the protecting function to be required also tends to be increased. In the situation, there is a possibility that a circuit scale might be increased or a cost might be increased in the case in which the circuit for detecting a temperature for each of the protecting functions is provided.

The problem might also be caused in a lighting circuit of a light source, for example, an LED (Light Emitting Diode) in addition to a lighting circuit of a discharge lamp.

According to document US 2002/0109467 A1, in a discharge-lamp lighting circuit, a DC-DC converter circuit for boosting or lowering DC input voltage Vin from a DC power supply, a DC-AC converter circuit for converting the output voltage of the DC-DC converter circuit to AC voltage, and a control circuit for controlling the supply of electric power to a discharge lamp are provided. Further, the supply of power to the discharge lamp is increased in response to the lowering of the DC input voltage when the lowering of the DC input voltage Vin is detected. The supply of power to the discharge lamp is lowered as the ambient temperature rises even though the lowering of the DC input voltage Vin remains unchanged.

According to document US 4,677,346, a switched AC ballast is operated synchronously with the AC line during normal running of a gas discharge lamp to limit EMI and is locked in a single phase during start-up (i.e. ignition, glow mode and warm-up) to protect the bridge switches from high voltage starting signals. Devices having a high impedance control input, such as FETs, are employed in the switching bridge thus allowing control of the upper devices in the bridge without a floating power supply. A control circuit insures proper operation of the bridge switches during all operating modes of the discharge lamp.

SUMMARY

Exemplary embodiments of the present invention provide a light source lighting circuit which can share a circuit for detecting information indicative of an environment of an operation, for example, a temperature.

An exemplary embodiment of the invention relates to a light source lighting circuit. The light source lighting circuit includes a driving voltage generating circuit configured to supply a driving voltage to a light source, and a control circuit configured to control the driving voltage generating circuit. The control circuit includes a plurality of processing circuits configured to control the driving voltage generating circuit using corresponding control voltages respectively, an environment information converting circuit configured to convert information indicative of an environment of an operation into a state current based on a predetermined converting rule, and a control voltage generating circuit configured to generate the control voltages for the processing circuits and configured to regulate each of the control voltages by using the state current. For at least one of the control voltages, the control voltage generating circuit is configured to divide a reference voltage by a resistive element and set, as a control voltage, a voltage on a voltage dividing point which is obtained by causing the state current to flow to the voltage dividing point.

According to the aspect, the control voltage required for each of the processing circuits is regulated by the state current generated
by the environment information converting circuit. Accordingly, it is apparent that the processing circuits share the circuit for converting the information indicative of the environment of the operation into the state current.

The information indicative of the environment of the operation may be a temperature of the light source lighting circuit. The converting rule may serve to carry out a conversion in such a manner that a coefficient of proportionality of a temperature and the state current is varied depending on the temperature. In this case, it is also possible to cope with a more complicated temperature control in the processing circuit.

The driving voltage generating circuit may include a switching regulator for generating the driving voltage. The control circuit may include an output regulating circuit for controlling a duty ratio of ON/OFF of a switching device in the switching regulator. One of the processing circuits maybe a current limiting circuit for carrying out a control for limiting a switching current flowing to the switching device. A control voltage of the current limiting circuit may serve to give a threshold current of the switching current. The current limiting circuit may cause the output regulating circuit to turn OFF the switching device when a voltage drop generated in a resistive element to which the switching current flows exceeds the control voltage. The converting rule may be determined to cancel a change in a resistance value of the resistive element to which the switching current flows depending on a temperature. In this case, it is possible to protect the switching device over a wide temperature range.

The driving voltage generating circuit may include a switching regulator for generating the driving voltage. The control circuit may include an output regulating circuit for controlling a duty ratio of ON/OFF of a switching device in the switching regulator based on an error signal. One of the processing circuits may be an error amplifying circuit for comparing an electrical state of a light source with a target state, thereby generating the error signal. A control voltage of the error amplifying circuit may be indicative of the target state. The error amplifying circuit may generate the error signal corresponding to a difference between a voltage indicative of the electrical state of the light source and the control voltage. The control voltage generating circuit may regulate the control voltage in the error amplifying circuit in order to reduce a power to be supplied to the light source when a temperature of the light source lighting circuit is higher than a predetermined threshold temperature. In this case, it is possible to reduce generation of heat by decreasing the power to be supplied to the light source at a higher temperature than the threshold temperature.

According to the invention, it is possible to share a circuit for detecting information indicative of an environment of an operation, for example, a temperature.

Other features and advantages may be apparent from the following detailed description, the accompanying drawings and the claims.

BRIEF DESCRIPTION OF THE DRAWINGS

Fig. 1 is a circuit diagram showing structures of a discharge lamp lighting circuit and members connected thereto according to an embodiment,
Fig. 2 is a circuit diagram showing structures of a control circuit in Fig. 1 and a periphery thereof,
Fig. 3 is a time chart showing a waveform related to a current limiting function of the control circuit in Fig. 1,
Fig. 4 is a graph showing an example of a converting rule in a temperature information converting circuit of Fig. 2,
Fig. 5 is a time chart showing an operating state of the discharge lamp lighting circuit in Fig. 1,
Figs. 6A and 6B are time charts showing an operating state after a DC period of the discharge lamp lighting circuit,
Fig. 7 is a circuit diagram showing a structure of a temperature derating regulating circuit according to a variant, and
Fig. 8 is a circuit diagram showing a structure of a battery voltage derating regulating circuit.

DETAILED DESCRIPTION

The invention will be described below based on a suitable embodiment with reference to the drawings. The same or equivalent components, members and processings shown in each of the drawings properly have the same designations and repetitive description will be omitted. Moreover, a part of the members which are not important to the description is displayed with an omission in each of the drawings. Furthermore, the designation attached to a voltage, a current or a resistance is used to represent a voltage value, a current value or a resistance value if necessary.

In the specification, "a state in which a member A is connected to a member B" includes the case in which the members A and B are physically connected directly to each other, and furthermore, the case in which the members A and B are indirectly connected through another member which does not influence an electrical connecting state. Similarly, "a state in which a member C is provided between members A and B" includes the case in which the members A and C or the members B and C are directly connected to each other, and furthermore, the case in which they are indirectly connected through another member which does not influence an electrical connecting state.

The discharge lamp lighting circuit according to the embodiment has a current limiting function for preventing an overcurrent from flowing to a switching device of a DC/DC converter and a temperature derating function for reducing a driving power at a high temperature. The discharge lamp lighting circuit has a single temperature information converting circuit for acquiring information about a temperature of the discharge lamp lighting circuit and carrying out a conversion into a state current, and controls the current limiting function and the temperature derating function by using the state current generated by the temperature information converting circuit. Consequently, it is possible to reduce a circuit scale and to contribute to a decrease in a cost more greatly as compared with the related art in which the information about the temperature is acquired and converted for each of functions, such as the current limiting function and the temperature derating function.

The derating function serves to reduce a driving power to be supplied to a discharge lamp at time of a drop of a battery voltage or at a high temperature, thereby enhancing a safety of the discharge lamp lighting circuit. The temperature derating function represents a derating function for the temperature of the discharge lamp lighting circuit.

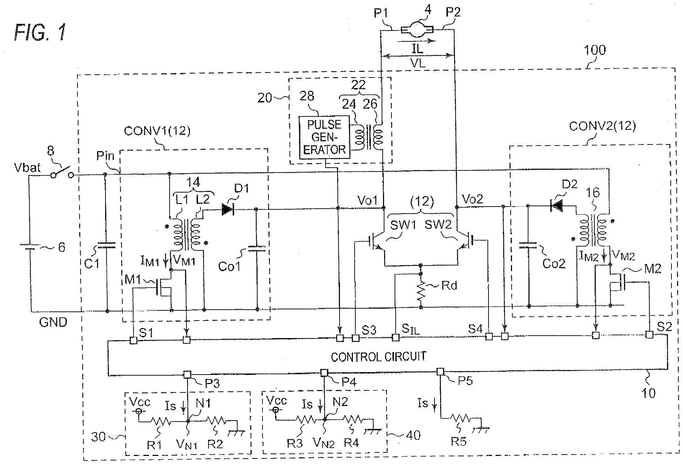

Fig. 1 is a circuit diagram showing structures of a discharge lamp lighting circuit 100 and members connected thereto according to the embodiment. The discharge lamp lighting circuit 100 drives a discharge lamp 4 to be an on-vehicle metal halide lamp. The discharge lamp lighting circuit 100 and the discharge lamp 4 are mounted on a lighting device for a vehicle. The discharge lamp lighting circuit 100 is connected to an on-vehicle battery (which will be hereinafter referred to as a battery) 6 and a power switch 8.

The battery 6 generates a DC battery voltage Vbat of 12V (or 24V). The power switch 8 is a relay switch disposed for controlling ON/OFF operations of the discharge lamp 4 and is provided in series to the battery 6. When the power switch 8 is turned ON, the battery voltage Vbat is supplied from the battery 6 to the discharge lamp lighting circuit 100.

The discharge lamp lighting circuit 100 raises the smoothed battery voltage Vbat and converts the raised battery voltage Vbat into an alternating current, and supplies the alternating current to the discharge lamp 4. Description will be given to a detailed structure of the discharge lamp lighting circuit 100.

The discharge lamp lighting circuit 100 includes a first DC/DC converter CONV1, a second DC/DC converter CONV2, a control circuit 10, a starter circuit 20, a first switch SW1, a second switch SW2, a current detecting resistor Rd, a first voltage dividing circuit 30, a second voltage dividing circuit 40, a fifth resistor R5, and an input capacitor C1.

The input capacitor C1 is provided in parallel with the battery 6 and smoothes the battery voltage Vbat. More specifically, the input capacitor C1 is provided in the vicinity of a first transformer 14 and a second transformer 16, and fulfills a function for smoothing a voltage for a switching operation of the first DC/DC converter CONV1 and the second DC/DC converter CONV2.

The control circuit 10 includes a functional IC (Integrated Circuit) for controlling the whole discharge lamp lighting circuit 100 and controls a sequence of the discharge lamp lighting circuit 100, and furthermore, regulates a power to be supplied to the discharge lamp 4. The control circuit 10 executes the following sequence, thereby turning ON the discharge lamp 4 to stabilize a light output thereof.

1. ON operation
2. Breakdown
3. DC period
4. Run-up
5. Stationary lighting

The details of each sequence will be described below.

The first DC/DC converter CONV1, the second DC/DC converter CONV2, the first switch SW1 and the second switch SW2 form a driving voltage generating circuit 12 for generating a driving voltage VL for the discharge lamp 4. The driving voltage generating circuit 12 supplies the driving voltage VL to be an alternating current having a lighting frequency f1 to both ends of the discharge lamp 4 for the run-up and the stationary lighting period. The lighting frequency f1 is preferably set to be equal to or lower than 10 kHz, and furthermore, approximately 250 Hz to 750 Hz, and is set to be 300 Hz in the embodiment. An inverse number of the lighting frequency f1 is referred to as a lighting cycle T1 (= 1/f1).

The first DC/DC converter CONV1 is a switching regulator of an insulating type, and includes a first switching device M1, the first transformer 14, a first rectifier diode D1 and a first output capacitor Co1. Since the first DC/DC converter CONV1 has a general topology, brief description will be given.

A primary coil L1 of the first transformer 14 and the first switching device M1 are provided in parallel with the input capacitor C1 and in series between an input terminal Pin of the first DC/DC converter CONV1 and a grounding terminal (GND). For example, the first switching device M1 is constituted by an N-channel MOSFET (Metal Oxide Semiconductor Field Effect Transistor). When the first switching device M1 is turned ON, a first switching current $I_{M1}$ flows from a drain toward a source in the first switching device M1. In that case, a voltage drop is generated in a first ON resistor $R_{M1}$ (not shown) of the first switching device M1 so that a first drain voltage $V_{M1}$ (= $I_{M1} \times R_{M1}$) is generated in the drain of the first switching device M1. The control circuit 10 acquires the first drain voltage $V_{M1}$ to be used for a control in a first PBP (Pulse By Pulse) monitoring circuit 94 which will be described below.

A secondary coil L2 of the first transformer 14 has one of ends grounded and has the other end connected to an anode of the first rectifier diode D1. The first output capacitor Co1 is provided between a cathode of the first rectifier diode D1 and the grounding terminal.

A first control pulse signal S1 having a higher PWM frequency f2 than the lighting frequency f1 is applied to a control terminal (a gate) of the first switching device M1. For example, the PWM frequency f2 is 400 kHz. The first switching device M1 is turned ON when the first control pulse signal S1 has a high level and is turned OFF when the first control pulse signal S1 has a low level. The control circuit 10 regulates a duty ratio of the high and low levels of the first control pulse signal S1 through a feedback based on an electrical state of the discharge lamp 4.

The first DC/DC converter CONV1 can switch an active state and a non-active state, and supplies a first output voltage Vo1 to an end P1 of the discharge lamp 4 in the active state.

The second DC/DC converter CONV2 has the same circuit topology as the first DC/DC converter CONV1. In other words, the first rectifier diode D1 and a second rectifier diode D2, the first output capacitor Co1 and a second output capacitor Co2, the first transformer 14 and the second transformer 16, and the first switching device M1 and a second switching device M2 correspond to each other. When the second switching device M2 is turned ON, a second switching current $I_{M2}$ flows from a drain toward a source in the second switching device M2. In that case, a voltage drop is generated in a second ON resistor $R_{M2}$ (not shown) of the second switching device M2 so that a second drain voltage $V_{M2}$ ($= I_{M2} \times R_{M2}$) is generated in the drain of the second switching device M2. The control circuit 10 acquires the second drain voltage $V_{M2}$ to be used for a control in a second PBP monitoring circuit 96 which will be described below. ON/OFF operations of the second switching device M2 are controlled in response to a second control pulse signal S2 generated by the control circuit 10 through a feedback based on the electrical state of the discharge lamp 4.

There will be considered the case in which an N-channel MOSFET having the same characteristic is used in both the first switching device M1 and the second switching device M2. Accordingly, the first ON resistor $R_{M1}$ and the second ON resistor $R_{M2}$ have the same absolute value and temperature characteristic. For both the first switching device M1 and the second switching device M2, a maximum value of a switching current which can be caused to flow to a drain and a source is determined as a maximum current $I_{M\_MAX}$ in order to ensure a safety.

The second DC/DC converter CONV2 can also switch an active state and a non-active state, and supplies a second output voltage Vo2 to the other end P2 of the discharge lamp 4 in the active state.

The first switch SW1 is provided on the end P1 side of the discharge lamp 4 and electrically conducts the end P1 of the discharge lamp 4 to a fixed voltage terminal (a grounding terminal) in an ON state. The second switch SW2 is provided on the other end P2 side of the discharge lamp 4 and electrically conducts the end P2 of the discharge lamp 4 to the fixed voltage terminal (the grounding terminal) in the ON state. Although an IGBT (Insulated Gate Bipolar Transistor) or an MOSFET is suitable for the first switch SW1 and the second switch SW2, another alternative device may be used. The ON/OFF states of the first switch SW1 and the second switch SW2 are controlled in response to a first control signal S3 and a second control signal S4 which are sent from the control circuit 10.

The first DC/DC converter CONV1 and the second DC/DC converter CONV2 complementarity repeat the active state and the non-active state at the lighting frequency f1. In other words, each of a period for which the first DC/DC converter CONV1 is active and a period for which the second DC/DC converter CONV2 is active is set to have a half cycle of the lighting cycle T1. A state in which the first DC/DC converter CONV1 is active and a state in which the second DC/DC converter CONV2 is active will be hereinafter referred to as a first state $\phi$1 and a second state $\phi$2, respectively. The first switch SW1 is turned ON when the second DC/DC converter CONV2 is active, that is, in the second state $\phi$2, and the second switch SW2 is turned ON when the first DC/DC converter CONV1 is active, that is, in the first state $\phi$1.

In the first state $\phi$1, the first output voltage Vo1 and a grounding voltage (0V) are applied to the end P1 and the other end P2 in the discharge lamp 4, respectively. As a result, the driving voltage VL (which is almost equal to Vo1) is applied with a first polarity to the discharge lamp 4. In the second state $\phi$2, the second output voltage Vo2 and the grounding voltage are applied to the other end P2 and the end P1 in the discharge lamp 4, respectively. As a result, the driving voltage VL (which is almost equal to Vo2) is applied, to the discharge lamp 4, with a second polarity which is reverse to the first polarity.

For the run-up and the stationary lighting period, the control circuit 10 alternately repeats the first state $\phi$1 and the second state $\phi$2 in the lighting cycle T1. As a result, the AC driving voltage VL is supplied to the discharge lamp 4.

The current detecting resistor Rd is provided on a path for a lamp current IL flowing to the discharge lamp 4. In the circuit of Pig. 1, the current detecting resistor Rd is provided between emitters of the first switch SW1 and the second switch SW2 which are connected in common and the grounding terminal. In the first state $\phi$1, a lamp current flows, to the discharge lamp 4, with the first polarity (in a rightward direction of Fig. 1). In the second state $\phi$2, the lamp current flows, to the discharge lamp 4, with the second polarity (in a leftward direction of Fig. 1). A voltage drop (which will be referred to as a current detecting signal $S_{IL}$) which is proportional to the lamp current IL is generated in the current detecting resistor Rd in each of the first state $\phi$1 and the second state $\phi$2. The current detecting signal $S_{IL}$ is input to the control circuit 10.

The starter circuit 20 is provided for causing the discharge lamp 4 to break down. The starter circuit 20 includes a starter transformer 22 and a pulse generating portion 28. The pulse generating portion 28 applies a pulse voltage having an amplitude of 400V to 1kV to a primary coil 24 of the starter transformer 22. As a result, a high voltage pulse (for example, 20kV) corresponding to a winding ratio of the starter transformer 22 is generated on a secondary coil 26 side and is applied to the discharge lamp 4. As a result, the discharge lamp 4 causes the breakdown so that a discharge is started.

The first voltage dividing circuit 30 divides a source voltage Vcc at a predetermined voltage dividing ratio. The source voltage Vcc is a fixed voltage generated from the battery voltage Vbat, for example, 3V. The first voltage dividing circuit 30 includes a first resistor R1 and a second resistor R2 which are connected in series between the grounding terminal and a power terminal for giving the source voltage Vcc. A first connecting node N1 (a voltage dividing point) at which one of ends of the first resistor R1 and one of ends of the second resistor R2 are connected to each other is connected to a power regulating terminal P3 of the control circuit 10. As will be described below, a state current Is flows from the power regulating terminal P3 into the first connecting node N1. Accordingly, a first voltage dividing point voltage $V_{N1}$ to be a voltage of the first connecting node N1 has a value determined by the state current Is, the first resistor R1 and the second resistor R2 as follows.
[Equation 1]

$$V_{N1} = \frac{R1 \cdot R2}{R1 + R2} I_S + \frac{R2}{R1 + R2} V_{CC}$$

$$\cdots \quad (\text{Equation } 1)$$

A second term on a right side in the Equation 1 presents an offset of the first voltage dividing point voltage $V_{N1}$ and the following equation is formed.
[Equation 2]

$$\frac{R2}{R1 + R2} = \frac{\frac{R2}{R1}}{1 + \frac{R2}{R1}} = \frac{\alpha}{1 + \alpha}$$

$$\cdots \quad (\text{Equation } 2)$$

Therefore, the offset represents a function of a voltage dividing ratio $\alpha$ = R2/R1. A first term on the right side of the Equation 1 indicates a proportional part of the first voltage dividing point voltage $V_{N1}$ to the state current $I_S$. A constant of the proportionality indicates a combined resistance in the case in which the first resistor R1 and the second resistor R2 are connected in parallel.

Consequently, it is possible to obtain the first voltage dividing point voltage $V_{N1}$ which is proportional to the state current Is (which is a voltage to be supplied to a temperature derating regulating circuit 86 of the control circuit 10 as will be described below), and furthermore, it is possible to change the offset of the first voltage dividing point voltage $V_{N1}$ and the constant of the proportionality by varying the voltage dividing ratio and the whole resistance value, respectively. Since the first resistor R1 and the second resistor R2 are provided on an outside of the control circuit 10 which is integrated, the resistance values thereof can easily be varied. In the discharge lamp lighting circuit 100 according to the embodiment, accordingly, the offset of the first voltage dividing point voltage $V_{N1}$ and an invariable of the proportionality can easily be set and controlled finely.

The second voltage dividing circuit 40 has the same structure as the first voltage dividing circuit 30. The second voltage dividing circuit 40 includes a third resistor R3 and a fourth resistor R4 which are connected in series between the grounding terminal and the power terminal for giving the source voltage Vcc. A second connecting node N2 (a voltage dividing point) at which one of ends of the third resistor R3 and one of ends of the fourth resistor R4 are connected to each other is connected to a PBP regulating terminal P4. As will be described below, the state current Is flows from the PBP regulating terminal P4 into the second connecting node N2. Accordingly, a second voltage dividing point voltage $V_{N2}$ to be a voltage of the second connecting node N2 has a value determined by the state current Is, the third resistor R3 and the fourth resistor R4 as follows.
[Equation 3]

$$V_{N2} = \frac{R3 \cdot R4}{R3 + R4} I_S + \frac{R4}{R3 + R4} V_{CC} \qquad \cdots \quad (\text{Equation } 3)$$

In the discharge lamp lighting circuit 100 according to the embodiment, accordingly, an offset of the second voltage dividing point voltage $V_{N2}$ (which is a voltage to be supplied to a current limiting circuit 58 of the control circuit 10 as will be described below) and an invariable of the proportionality can easily be set and controlled finely in the same manner as the first voltage dividing circuit 30.

One of ends of the fifth resistor R5 is connected to a current converting terminal P5 of the control circuit 10. The other end of the fifth resistor R5 is grounded. As will be described below, a magnitude of the state current Is is controlled by a resistance value of the fifth resistor R5.

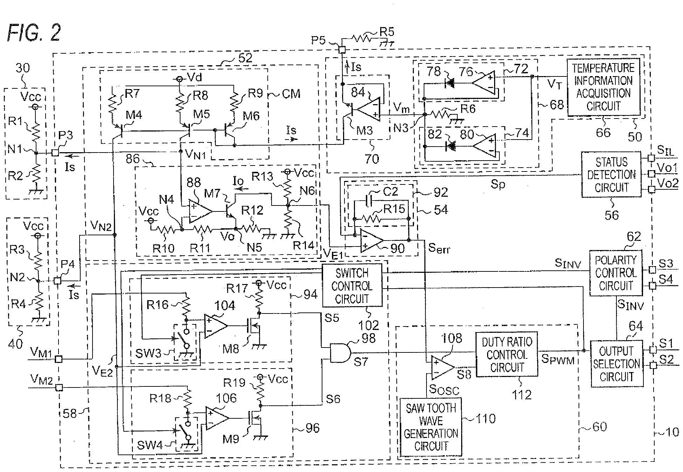

Fig. 2 is a circuit diagram showing structures of the control circuit 10 and a periphery thereof. Although the control circuit 10 includes other members for implementing each function of the discharge lamp lighting circuit 100 in addition to members shown in Fig. 2, the members are omitted in Fig. 2 for clarity of explanation.

The control circuit 10 includes a temperature information converting circuit 50, a control voltage generating circuit 52, a power control circuit 54, a state detecting circuit 56, the current limiting circuit 58, an output regulating circuit 60, a polarity control circuit 62 and an output destination selecting circuit 64.

The temperature information converting circuit 50 converts information indicative of an environment of an operation, for example, a temperature T of the discharge lamp lighting circuit 100 into the state current Is based on a predetermined converting rule. A dependency of the state current Is on the temperature T is used for implementing a desirable temperature characteristic through the power control circuit 54 or the current limiting circuit 58. In order to cope with a complicated temperature characteristic such as a nonlinear temperature characteristic, accordingly, the converting rule in the temperature information converting circuit 50 is set to be a rule for carrying out a conversion in such a manner that a coefficient of proportionality of the temperature T and the state current Is is varied depending on the temperature T. For example, the converting rule is determined to cancel a change in the resistance value of the first ON resistor $R_{M1}$ of the first switching device M1 to which the first switching current $I_{M1}$ flows depending on the temperature T.

The temperature information converting circuit 50 includes a temperature information acquiring circuit 66, a function converting circuit 68 and a GM amplifier 70.

The temperature information acquiring circuit 66 is constituted to include a temperature sensor such as a thermal diode. The temperature information acquiring circuit 66 generates a detecting temperature voltage $V_T$ which is proportional to the temperature T of the discharge lamp lighting circuit 100 by using the thermal diode. A constant of the proportionality is determined by a measuring condition such as a current caused to flow to the thermal diode or a characteristic of the thermal diode. There will be considered the case in which the discharge lamp lighting circuit 100 wholly has the uniform temperature T. However, it will be understood to the skilled in the art that the following explanation can also be applied to the case in which the discharge lamp lighting circuit 100 has a temperature gradient.

The function converting circuit 68 includes a first discharging type amplifying circuit 72, a second discharging type amplifying circuit 74 and a sixth resistor R6.

The first discharging type amplifying circuit 72 outputs a temperature converting voltage Vm upon receipt of the detecting temperature voltage $V_T$. The first discharging type amplifying circuit 72 includes a first differential amplifying circuit 76, a first discharging diode 78 and a plurality of resistors (not shown) for determining an amplification factor and an offset. The detecting temperature voltage $V_T$ is applied to a non-inverting input terminal of the first differential amplifying circuit 76. An anode of the first discharging diode 78 is connected to an output terminal of the first differential amplifying circuit 76. The temperature converting voltage Vm on a cathode side of the first discharging diode 78 is applied to an inverting input terminal of the first differential amplifying circuit 76 so that a feedback is constituted.

The second discharging type amplifying circuit 74 has the same structure as the first discharging type amplifying circuit 72. In other words, a second differential amplifying circuit 80 and the first differential amplifying circuit 76, and a second discharging diode 82 and the first discharging diode 78 correspond to each other. An amplification factor and an offset which are set by the second differential amplifying circuit 80 are different from those set by the first differential amplifying circuit 76.

One of ends of the sixth resistor R6 is connected to a third connecting node N3 to which the cathode of the first discharging diode 78 and a cathode of the second discharging diode 82 are connected. The other end of the sixth resistor R6 is grounded.

In the function converting circuit 68, the first discharging type amplifying circuit 72 and the second discharging type amplifying circuit 74 are connected in parallel and the detecting temperature voltage $V_T$ is input thereto. The temperature converting voltage Vm appearing on the third connecting node N3 to which an output of the first discharging type amplifying circuit 72 and that of the second discharging type amplifying circuit 74 are connected is a higher one of a voltage to be output by the first differential amplifying circuit 76 based on an amplification factor and offset thereof and a voltage to be output by the second differential amplifying circuit 80 based on an amplification factor and offset thereof. In particular, there will be considered the case (a polygonal line) in which a value of the certain detecting temperature voltage $V_T$ (that is, a certain threshold temperature Tth) is set to be a boundary and the temperature converting voltage Vm is thus set to be the voltage to be output by one of the discharging type amplifying circuits when the temperature T is lower than the threshold temperature Tth and the voltage to be output by the other discharging type amplifying circuit when the temperature T is equal to or higher than the threshold temperature Tth. The amplification factor and the offset of the first differential amplifying circuit 76 and those of the second differential amplifying circuit 80 are properly set to apply the temperature converting voltage Vm. This is expressed in the following Equation.

[Equation 4]

$$V_m = \begin{cases} A1 \cdot T + B1 (T < Tth) \\ A2 \cdot T + B2 (T \geq Tth) \end{cases}$$

$$\cdots \quad (\text{Equation } 4)$$

wherein

$$A1 \cdot Tth + B1 = A2 \cdot Tth + B2$$

$$\cdots \quad (\text{Equation } 5)$$

wherein all of a first amplification factor A1, a second amplification factor A2, a first offset B1 and a second offset B2 are positive real numbers.

The GM amplifier 70 receives the temperature converting voltage Vm and converts the temperature converting voltage Vm into the state current Is. An output side of the GM amplifier 70 is connected to one of ends of the fifth resistor R5 provided on the outside of the control circuit 10 through the current converting terminal P5. The magnitude of the state current Is generated by the GM amplifier 70 is adjusted by regulating the resistance value of the fifth resistor R5. Consequently, it is possible to finely control the magnitude of the state current Is by regulating the resistance value of the fifth resistor R5 (which is not integrated) at the outside of the control circuit 10 also after the control circuit 10 is integrated, which is convenient.

The GM amplifier 70 includes a third differential amplifying circuit 84 and a third switching device M3. The temperature converting voltage Vm is applied to a non-inverting input terminal of the third differential amplifying circuit 84. An output terminal of the third differential amplifying circuit 84 is connected to a base of the third switching device M3 to be an npn type bipolar transistor. An emitter of the third switching device M3 is connected to an inverting input terminal of the third differential amplifying circuit 84 so that a feedback is formed. The emitter of the third switching device M3 is also connected to the current converting terminal P5. The third switching device M3 leads the state current Is given by the following Equation 6 from a collector thereof.

$$I_s = V_m / R5 \qquad \cdots \quad (\text{Equation } 6)$$

The control voltage generating circuit 52 generates a first reference voltage $V_{E1}$ required for the power control circuit 54 and a second reference voltage $V_{E2}$ required for the current limiting circuit 58 based on the state current Is. The control voltage generating circuit 52 regulates each of the first reference voltage $V_{E1}$ and the second reference voltage $V_{E2}$ by using the state current Is. The control voltage generating circuit 52 supplies the state current Is to the first voltage dividing circuit 30 through the power regulating terminal P3 for the first reference voltage $V_{E1}$ so that the first voltage dividing point voltage $V_{N1}$ is obtained. The control voltage generating circuit 52 further processes the first voltage dividing point voltage $V_{N1}$ into the first reference voltage $V_{E1}$.

The control voltage generating circuit 52 supplies the state current Is to the second voltage dividing circuit 40 through the PBP regulating terminal P4 for the second reference voltage $V_{E2}$ so that the second voltage dividing point voltage $V_{N2}$ is obtained. The control voltage generating circuit 52 further processes the second voltage dividing point voltage $V_{N2}$ into the second reference voltage $V_{E2}$.

The control voltage generating circuit 52 regulates the first reference voltage $V_{E1}$ in order to decrease a power to be supplied to the discharge lamp 4 when the temperature T of the discharge lamp lighting circuit 100 is higher than a predetermined temperature derating starting temperature Td. In particular, the temperature derating starting temperature Td is set to be higher than the threshold temperature Tth. In other words, the temperature derating starting temperature Td is set in such a manner that a change in the first reference voltage $V_{E1}$ with respect to the temperature T is simple, particularly, linear in a temperature region in which temperature derating is required. This is preferable in respect of a control of the temperature derating function.

The control voltage generating circuit 52 includes a current source CM and the temperature derating regulating circuit 86.

The current source CM supplies, to the power regulating terminal P3 and the PBP regulating terminal P4, a current having the same magnitude as the state current Is generated by the GM amplifier 70. The current source CM is a current mirror circuit, for example. The current source CM includes a seventh resistor R7, an eighth resistor R8, a ninth resistor R9, a fourth switching device M4, a fifth switching device M5 and a sixth switching device M6. Resistance values of the seventh resistor R7, the eighth resistor R8 and the ninth resistor R9 are set to be equal to each other. All of the fourth switching device M4, the fifth switching device M5 and the sixth switching device M6 are pnp type bipolar transistors and their bases are connected in common. One of ends of the seventh resistor R7, one of ends of the eighth resistor R8 and one of ends of the ninth resistor R9 are connected to a source voltage Vd. The source voltage Vd is a separate fixed voltage from the source voltage Vcc and is 6V, for example. The other end of the ninth resistor R9 is connected to an emitter of the sixth switching device M6. A collector of the sixth switching device M6 is connected to a base of the sixth switching device M6, and furthermore, is connected to a collector of the third switching device M3. The other end of the eighth resistor R8 is connected to an emitter of the fifth switching device M5. The other end of the seventh resistor R7 is connected to an emitter of the fourth switching device M4.

A collector of the fifth switching device M5 is connected to the power regulating terminal P3. Moreover, the collector of the fifth switching device M5 is connected to a non-inverting input terminal of a fourth differential amplifying circuit 88 of the temperature derating regulating circuit 86. The fifth switching device M5 supplies the state current Is from a collector thereof to the power regulating terminal P3. The power regulating terminal P3 is connected to the first connecting node N1 of the first voltage dividing circuit 30. Therefore, a voltage of the collector of the fifth switching device M5 is equivalent to the first voltage dividing point voltage $V_{N1}$ obtained by the Equation 1. Accordingly, the first voltage dividing point voltage $V_{N1}$ is applied to the non-inverting input terminal of the fourth differential amplifying circuit 88.

A collector of the fourth switching device M4 is connected to the PBP regulating terminal P4. Moreover, the collector of the fourth switching device M4 is used as a reference voltage of the current limiting circuit 58. The fourth switching device M4 supplies the state current Is from the collector to the PBP regulating terminal P4. The PBP regulating terminal P4 is connected to the second connecting node N2 of the second voltage dividing circuit 40. Therefore, a voltage of the collector of the fourth switching device M4 is equivalent to the second voltage dividing point voltage $V_{N2}$ obtained by the Equation 3.

The temperature derating regulating circuit 86 processes the first voltage dividing point voltage $V_{N1}$ to generate the first reference voltage $V_{E1}$. The temperature derating regulating circuit 86 regulates the first reference voltage $V_{E1}$ in order to decrease a power to be supplied to the discharge lamp 4 when the temperature T of the discharge lamp lighting circuit 100 is higher than the temperature derating starting temperature Td.

The temperature derating regulating circuit 86 includes the fourth differential amplifying circuit 88, a seventh switching device M7, a tenth resistor R10, an eleventh resistor R11, a twelfth resistor R12, a thirteenth resistor R13, and a fourteenth resistor R14. An output terminal of the fourth differential amplifying circuit 88 is connected to a base of the seventh switching device M7 to be an npn type bipolar transistor. The tenth resistor R10, the eleventh resistor R11 and the twelfth resistor R12 are provided in this order in series between the power terminal (Vcc) and the grounding terminal. A voltage of a fourth connecting node N4 between one of ends of the tenth resistor R10 and one of ends of the eleventh resistor R11 is applied to an inverting input terminal of the fourth differential amplifying circuit 88. A fifth connecting node N5 between the other end of the eleventh resistor R11 and one of ends of the twelfth resistor R12 is connected to an emitter of the seventh switching device M7. The thirteenth resistor R13 and the fourteenth resistor R14 are provided in this order in series between the power terminal (Vcc) and the grounding terminal. A sixth connecting node N6 between one of ends of the thirteenth resistor R13 and one of ends of the fourteenth resistor R14 is connected to a collector of the seventh switching device M7. A voltage of the sixth connecting node N6 is supplied as the first reference voltage $V_{E1}$ to the power control circuit 54.

In the temperature derating regulating circuit 86, a sink current Io is started to be led from the sixth connecting node N6 when the first voltage dividing point voltage $V_{N1}$ reaches a certain threshold voltage Vth. The temperate T for giving $V_{N1}$ = Vth is equivalent to the temperature derating starting temperature Td.

In the embodiment, R10 : R11 = 1 : 2 and a resistance value of the tenth resistor R10 are set to be greater than a resistance value of the twelfth resistor R12 by approximately two digits. In the case in which the first voltage dividing point voltage $V_{N1}$ is lower than 2Vcc/3 to be the threshold voltage Vth, the sink current Io does not flow. When the first voltage dividing point voltage $V_{N1}$ is higher than 2Vcc/3 to be the threshold voltage Vth, the sink current Io is started to flow. In this case, a sink voltage Vo generated in the fifth connecting node N5 is obtained by the following Equation 7.

[Equation 5]

$$V_O + \frac{2}{3}(V_{CC} - V_O) = V_{N1}$$

$$= \frac{R1 \cdot R2}{R1 + R2} I_S + \frac{R2}{R1 + R2} V_{CC}$$

(Substitute Equation 1)

$$= \frac{R1 \cdot R2}{R1 + R2} \cdot (\frac{V_m}{R5}) + \frac{R2}{R1 + R2} V_{CC}$$

(Substitute Equation 6)

$$= \frac{R1 \cdot R2}{(R1 + R2) \cdot R5}(A2 \cdot T + B2) + \frac{R2}{R1 + R2} V_{CC}$$

(Substitute Equation 4)

$$\Rightarrow V_O = \frac{3 \cdot R1 \cdot R2}{(R1 + R2) \cdot R5}(A2 \cdot T + B2) + \frac{3 \cdot R2}{R1 + R2} V_{CC} - 2 \cdot V_{CC}$$

$\cdots$ (Equation 7)

The Equations 1, 4 and 6 were used for leading the Equation 7. Moreover, T > Td > Tth was used. In consideration of the sink current Io = Vo/R12, the sink current Io is determined as follows.

[Equation 6]

$$I_O = \begin{cases} 0(T \le Td) \\ \frac{3 \cdot R1 \cdot R2}{(R1 + R2) \cdot R5 \cdot R12}(A2 \cdot T + B2) + \frac{3 \cdot R2}{(R1 + R2) \cdot R12} V_{CC} - \frac{2 \cdot V_{CC}}{R12}(T > Td) \end{cases}$$

$\cdots$ (Equation 8)

wherein

$$\frac{2}{3} V_{CC} = \frac{R1 \cdot R2}{(R1 + R2) \cdot R5}(A2 \cdot Td + B2) + \frac{R2}{R1 + R2} V_{CC}$$

$\cdots$ (Equation 9)

The first reference voltage $V_{E1}$ is obtained by using the sink current Io through the following Equation 10.

[Equation 7]

$$V_{E1} = \frac{R13 \cdot R14}{R13 + R14}\left(\frac{V_{CC}}{R13} - I_O\right)$$

$\cdots$ (Equation 10)

When the sink current Io is increased with a rise in the temperature T so that the first reference voltage $V_{E1}$ reaches zero, the first reference voltage $V_{E1}$ is zero or has a predetermined small value even if the temperature T is raised more greatly.

In the case in which the second amplification factor A2, the second offset B2, the source voltage Vcc and the resistance value of the twelfth resistor R12 are given and a characteristic of desirable temperature derating, that is, a tilt of the sink current Io to the temperature T at the temperature derating starting temperature Td within a temperature range of T > Td is given, it is possible to determine a ratio among the first resistor R1, the second resistor R2 and the fifth resistor R5 by using the Equations 8 and 9. To the contrary, it is possible to implement the characteristic of the desirable temperature derating by regulating the resistance values of the first resistor R1, the second resistor R2 and the fifth resistor R5 also after the control circuit 10 is integrated. This is useful when a variation in the characteristic of each electronic component to be used for the discharge lamp lighting circuit 100 is corrected or the derating characteristics is adjusted based on a difference in a temperature environment in which the discharge lamp lighting circuit 100 is provided, for example.

The state detecting circuit 56 detects an electrical state of the discharge lamp 4 upon receipt of the current detection signal $S_{IL}$, the first output voltage Vo1 and the second output voltage Vo2. The state detecting circuit 56 outputs, to the power control circuit 54, a power information signal Sp indicative of the electrical state of the discharge lamp 4, for example, a driving power (VL X IL).

The power control circuit 54 receives the first reference voltage $V_{E1}$ as a voltage indicative of a target state. The power control circuit 54 generates an error signal Serr corresponding to a difference between the first reference voltage $V_{E1}$ and a voltage of the power information signal Sp. The power control circuit 54 includes an error amplifier 90 and a phase compensating circuit 92.

The error amplifier 90 amplifies an error between the first reference voltage $V_{E1}$ and the voltage of the power information signal Sp and generates the error signal Serr.

The phase compensating circuit 92 compensates a phase of the error signal Serr for that of the power information signal Sp and prevents an oscillation of the whole control circuit 10. The phase compensating circuit 92 includes a phase compensating capacitor C2 and a fifteenth resistor R15 which are provided in parallel between the power information signal Sp and the error signal Serr.

The polarity control circuit 62 generates an inverter signal $S_{INV}$ and supplies the inverter signal $S_{INV}$ to a switch control circuit 102 and the output destination selecting circuit 64. The inverter signal $S_{INV}$ takes complementary levels in the first state $\phi1$ and the second state $\phi2$. The inverter signal $S_{INV}$ is set to have a high level in the first state $\phi1$ and to have a low level in the second state $\phi2$.

The polarity control circuit 62 generates the first control signal S3 and the second control signal S4 based on whether the discharge lamp lighting circuit 100 is set in the first state $\phi1$ or the second state $\phi2$.

The output regulating circuit 60 controls a duty ratio of ON/OFF of the switching device in each of the DC/DC converters based on the error signal Serr. The output regulating circuit 60 includes a PWM comparator 108, a sawtooth generating circuit 110 and a duty ratio limiting circuit 112.

The sawtooth generating circuit 110 generates a triangular wave-shaped or sawtooth cyclic signal Sosc having a PWM frequency f2.

The PWM comparator 108 compares the error signal Serr with the cyclic signal Sosc, thereby generating a prelimitation PWM signal S8.

The duty ratio limiting circuit 112 receives the prelimitation PWM signal S8 and a PBP regulating signal S7 which will be described below. The duty ratio limiting circuit 112 generates a PWM signal $S_{PWM}$ having a waveform aligned with the prelimitation PWM signal S8 except for the following case. The duty ratio limiting circuit 112 sets the PWM signal $S_{PWM}$ into a low level when the PBP regulating signal S7 is set to have the low level for a period for which the prelimitation PWM signal S8 has a high level. The duty ratio limiting circuit 112 sets the PWM signal $S_{PWM}$ to have the high level in a timing in which the prelimitation PWM signal S8 is then set to have the high level.

The output destination selecting circuit 64 receives the inverter signal $S_{INV}$ and the PWM signal $S_{PWM}$. The output destination selecting circuit 64 is constituted to include a buffer circuit for amplifying the PWM signal $S_{PWM}$. The output destination selecting circuit 64 outputs the amplified PWM signal $S_{PWM}$ as the first control pulse signal S1 to a control terminal of the first switching device M1 when the inverter signal $S_{INV}$ takes a high level. In this case, the output destination selecting circuit 64 fixes the second control pulse signal S2 into a low level, thereby turning OFF the second switching device M2.

The output destination selecting circuit 64 outputs the amplified PWM signal $S_{PWM}$ as the second control pulse signal S2 to a control terminal of the second switching device M2 when the inverter signal $S_{INV}$ takes the low level. In this case, the output destination selecting circuit 64 fixes the first control pulse signal S1 into the low level, thereby turning OFF the first switching device M1.

The current limiting circuit 58 carries out a control for limiting the switching current flowing to the switching device in each of the DC/DC converters. The current limiting circuit 58 uses the second reference voltage $V_{E2}$ (= the second voltage dividing point voltage $V_{N2}$) supplied from the control voltage generating circuit 52. as a voltage for giving the maximum current $I_{M\_MAX}$ of the switching current. Referring to the Equation 3, the second voltage dividing point voltage $V_{N2}$ can be regulated by the resistance values of the third resistor R3 and the fourth resistor R4. In other words, also after the control circuit 10 is integrated, it is possible to set the maximum current $I_{M\_MAX}$ to be a desirable current value by regulating the resistance values of the third resistor R3 and the fourth resistor R4. This is useful in an execution of a correction depending on absolute values of ON resistances of the first and second switching devices M1 and M2 used in the discharge lamp lighting circuit 100 or temperature characteristics thereof, for example.

The current limiting circuit 58 includes the first PBP monitoring circuit 94, the second PBP monitoring circuit 96, an AND gate 98 and a switch control circuit 102.

The switch control circuit 102 controls ON/OFF of a third switch SW3 and a fourth switch SW4 upon receipt of the inverter signal $S_{INV}$ and the PWM signal $S_{PWM}$ from the polarity control circuit 62 and the duty ratio limiting circuit 112, respectively.

The first PBP monitoring circuit 94 causes the output regulating circuit 60 to turn OFF the first switching device M1 when a voltage drop (= the first drain voltage $V_{M1}$) generated on the first ON resistor $R_{M1}$ to which the first switching current $I_{M1}$ flows exceeds the second reference voltage $V_{E2}$. The first PBP monitoring circuit 94 includes a first PBP comparator 104, an eighth switching device M8, the third switch SW3, a sixteenth resistor R16 and a seventeenth resistor R17. The first drain voltage $V_{M1}$ is applied to one of ends of the sixteenth resistor R16. The other end of the sixteenth resistor R16 is connected to one of ends of the third switch SW3 and a non-inverting input terminal of the first PBP comparator 104. The other end of the third switch SW3 is grounded. ON/OFF of the third switch SW3 is controlled by the switch control circuit 102. In the first state $\phi1$, the switch control circuit 102 turns OFF the third switch SW3 when the PWM signal $S_{PWM}$ has the high level, that is, the first switching device M1 is ON, and turns ON the third switch SW3 when the PWM signal $S_{PWM}$ has the low level, that is, the first switching device M1 is OFF. The switch control circuit 102 turns ON the third switch SW3 in the second state $\phi2$. In other words, the switch control circuit 102 turns OFF the third switch SW3 when the first switching device M1 is ON, and turns ON the third switch SW3 when the first switching device N1 is OFF.

The second reference voltage $V_{E2}$ is applied to an inverting input terminal of the first PBP comparator 104.

The seventeenth resistor R17 and the eighth switching device M8 are provided in series in this order between a power terminal to which the source voltage Vcc is applied and a grounding terminal. For example, the eighth switching device M8 is constituted by an N-channel MOSFET. An output terminal of the first PBP comparator 104 is connected to a gate of the eighth switching device M8. A first PBP regulating signal S5 generated on a node of one of ends of the seventeenth resistor R17 and a drain of the eighth switching device M8 is supplied to the AND gate 98. In the first PBP monitoring circuit 94, when the first drain voltage $V_{M1}$ is higher than the second reference voltage $V_{E2}$ for an ON period of the first switching device M1, the eighth switching device M8 is turned ON so that the first PBP regulating signal S5 is set to have the low level. When the first PBP regulating signal S5 is set to have the low level, the first switching device M1 is turned OFF until an ON period corresponding to a residual one pulse is ended after the first PBP regulating signal S5 is set to have the low level in the duty ratio limiting circuit 112. Since the first switching device M1 is turned OFF, the third switch SW3 is turned ON so that the eighth switching device M8 is turned OFF again.

The second PBP monitoring circuit 96 causes the output regulating circuit 60 to turn OFF the second switching device M2 when a voltage drop (= the second drain voltage $V_{M2}$) generated on the second ON resistor $R_{M2}$ to which the second switching current $I_{M2}$ flows exceeds the second reference voltage $V_{E2}$.

The second PBP monitoring circuit 96 has the same structure as the first PBP monitoring circuit 94. More specifically, a second PBP comparator 106 and the first PBP comparator 104, a ninth switching device M9 and the eighth switching device M8, the fourth switch SW4 and the third switch SW3, an eighteenth resistor R18 and the sixteenth resistor R16, and a nineteenth resistor R29 and the seventeenth resistor R17 correspond to each other. The second drain voltage $V_{M2}$ is applied to one of ends of the eighteenth resistor R18. In the second state $\phi2$, moreover, the switch control circuit 102 turns OFF the fourth switch SW4 when the PWM signal $S_{PWM}$ has the high level, that is, the second switching device M2 is ON, and turns ON the fourth switch SW4 when the PWM signal $S_{PWM}$ has the low level, that is, the second switching device M2 is OFF. The switch control circuit 102 turns ON the fourth switch SW4 in the first state $\phi1$. In other words, the switch control circuit 102 turns OFF the fourth switch SW4 when the second switching device M2 is ON, and turns ON the fourth switch SW4 when the second switching device M2 is OFF.

In the second PBP monitoring circuit 96, when the second drain voltage $V_{M2}$ is higher than the second reference voltage $V_{E2}$ for an ON period of the second switching device M2, the ninth switching device M9 is turned ON so that a second PBP regulating signal S6 is set to have the low level. When the second PBP regulating signal S6 is set to have the low level, the second switching device M2 is turned OFF until an ON period corresponding to a residual one pulse is ended after the second PBP regulating signal S6 is set to have the low level in the duty ratio limiting circuit 112. Since the second switching device M2 is turned OFF, the fourth switch SW4 is turned ON so that the ninth switching device M9 is turned OFF again.

The AND gate 98 outputs, to the duty ratio limiting circuit 112, AND of the first PBP regulating signal S5 and the second PBP regulating signal S6 as a PBP regulating signal S7.

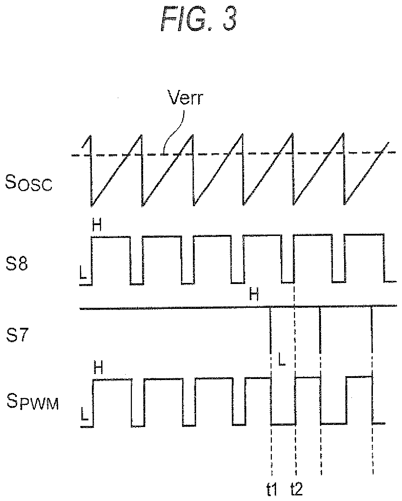

Fig. 3 is a time chart showing a waveform related to the current limiting function of the control circuit 10. An axis of ordinate and an axis of abscissa in Fig. 3 are properly enlarged and reduced for easy understanding, and each waveform shown in Fig. 3 is also simplified for the easy understanding. In Fig. 3, the cyclic signal Sosc, the prelimitation PWM signal S8, the PBP regulating signal S7 and the PWM signal $S_{PWM}$ are shown from an upper part. A broken line shown in the same column as the cyclic signal Sosc indicates a voltage Verr of the error signal Serr. In Fig. 3, there will be considered the case in which the first drain voltage $V_{M1}$ exceeds the second reference voltage $V_{E2}$ for the ON period of the first switching device M1 in the first state $\phi1$.

It is assumed that the first drain voltage $V_{M1}$ exceeds the second reference voltage $V_{E2}$ at a time t1 for the ON period of the first switching device M1 (the PWM signal $S_{PWM}$ has the high level). Consequently, the eighth switching device M8 is turned ON by the first PBP comparator 104 so that the PBP regulating signal S7 is set to have the low level. The duty ratio limiting circuit 112 sets the PWM signal $S_{PWM}$ to have the low level at the time t1 upon receipt of the fact that the PBP regulating signal S7 is set to have the low level. Since the first switching device M1 is turned OFF, the third switch SW3 is turned ON and the eighth switching device M8 is turned OFF again, and the PBP regulating signal S7 is returned to have the high level. A time required for the PBP regulating signal S7 to be once set into the low level and to be then returned into the high level is much shorter than a time scale shown in Fig. 3. In Fig. 3, therefore, the PBP regulating signal S7 is drawn as a signal having a pulse dropped into the low level at the time t1.

Next, the PWM signal $S_{PWM}$ is also set to have the high level at a time t2 that a leading edge appears in the prelimitation PWM signal S8. Subsequently, the ON period of the first switching device M1 is also limited for each pulse as long as there is continuously maintained a state in which an amount of the first switching current $I_{M1}$ flowing to the first switching device M1 is larger than that of the maximum current $I_{M\_MAX}$ defined by the second reference voltage $V_{E2}$. Consequently, it is possible to prevent an overcurrent from flowing to the first switching device M1. The second switching device M2 is also the same.

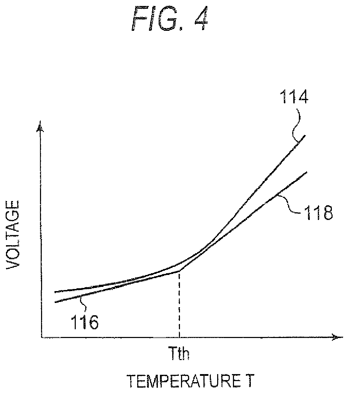

Fig. 4 is a graph showing an example of the converting rule in the temperature information converting circuit 50. Since the first ON resistance $R_{M1}$ and the second ON resistance $R_{M2}$ have the same absolute values and temperature characteristics, they are generally represented as an ON resistance $R_M$. A curve 114 represents (the ON resistance $R_M$). (the maximum current $I_{M\_MAX}$). The curve 114 indicates a curved change in a temperature of the ON resistance $R_M$. A first segment 116 and a second segment 118 indicate the second reference voltage $V_{E2}$ (= the second voltage dividing point voltage $V_{N2}$). The first segment 116 and the second segment 118 are connected to each other at the threshold temperature Tth.

Referring to the Equations 3, 4 and 6, the second reference voltage $V_{E2}$ is expressed as follows. The first segment 116 and the second segment 118 correspond to Equations 11 and 12, respectively. The first amplification factor A1, the second amplification factor A2, the first offset B1 and the second offset B2 (which are the converting rules in the temperature information converting circuit 50), and resistance values of the third resistor R3, the fourth resistor R4 and the fifth resistor R5 are determined in such a manner that the first segment 116 and the second segment 118 approximate to the curve 114 greatly. In the embodiment, particularly, it is possible to finely control a degree of the approximation easily by changing the resistance values of the third resistor R3, the fourth resistor R4 and the fifth resistor R2 also after the control circuit 10 is integrated.

[Equation 8]

$$V_{E2} = V_{N2} = \begin{cases} \dfrac{R3 \cdot R4}{R3 + R4} \cdot \dfrac{1}{R5} A1 \cdot T + \left( \dfrac{R3 \cdot R4}{R3 + R4} \cdot \dfrac{1}{R5} B1 + \dfrac{R4}{R3 + R4} \cdot V_{CC} \right)(T < Tth) \cdots (Equation\ 11) \\ \dfrac{R3 \cdot R4}{R3 + R4} \cdot \dfrac{1}{R5} A2 \cdot T + \left( \dfrac{R3 \cdot R4}{R3 + R4} \cdot \dfrac{1}{R5} B2 + \dfrac{R4}{R3 + R4} \cdot V_{CC} \right)(T \geq Tth) \cdots (Equation\ 12) \end{cases}$$

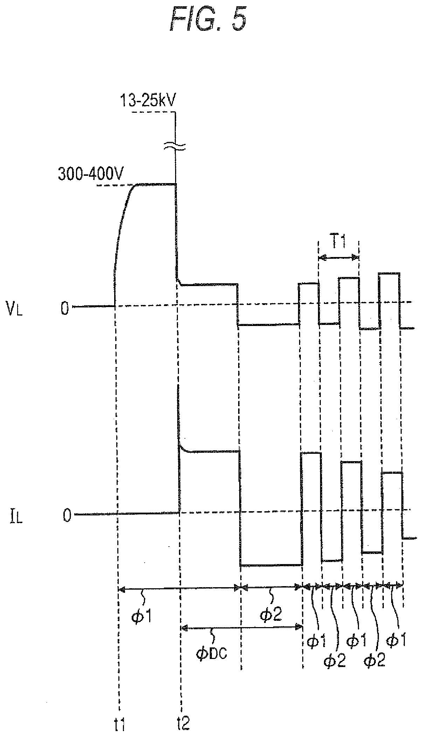

The structure of the discharge lamp lighting circuit 100 has been described above. Subsequently, an operation will be described in accordance with a sequence. Fig. 5 is a time chart showing an operating state of the discharge lamp lighting circuit 100. An axis of ordinate and an axis of abscissa in Fig. 5 are properly enlarged and reduced for easy understanding, and each waveform shown in Fig. 5 is simplified for the easy understanding.

1. ON Operation

When a user turns ON the power switch 8 at the time t1, the discharge lamp lighting circuit 100 is started. The control circuit 10 sets the first DC/DC converter CONV1 into the active state and sets the first switch SW1 into an OFF state (the first state $\phi1$), and raises the battery voltage Vbat into a predetermined high voltage (400V), thereby carrying out a stabilization.

2. Breakdown

The starter circuit 20 receives the first output voltage Vo1 of 400V which is generated by the first DC/DC converter CONV1. The pulse generating portion 28 applies a pulse having an amplitude of 400V to the primary coil 24 of the starter transformer 22. As shown in Fig. 5, a high voltage pulse of 20 kV or more is generated in the secondary coil 26 of the starter transformer 22 at this time. As a result, the driving voltage of the discharge lamp 4 is raised to approximately 13 to 25 kV and breaks down at the time t2 so that a glow discharge is started.

3. DC Period $\phi_{DC}$

After the breakdown, first of all, the control circuit 10 carries out a control for causing the lamp current IL to flow for approximately 10 ms in a direction of the first polarity in the first state $\phi 1$. Next, the control circuit 10 carries out switching into the second state $\phi 2$ and performs a control for causing the lamp current IL to flow for approximately 10 ms in a direction of the second polarity. The period will be referred to as a DC period $\phi_{DC}$. For the DC period $\phi_{DC}$, a transition from the glow discharge to an arc discharge is made.

When the arc discharge is stabilized after the DC period $\phi_{DC}$ is ended, the control circuit 10 controls the first DC/DC converter CONV1, the second DC/DC converter CONV2, the first switch SW1 and the second switch SW2 to alternately repeat the first state $\phi 1$ and the second state $\phi 2$ in the lighting cycle T1.

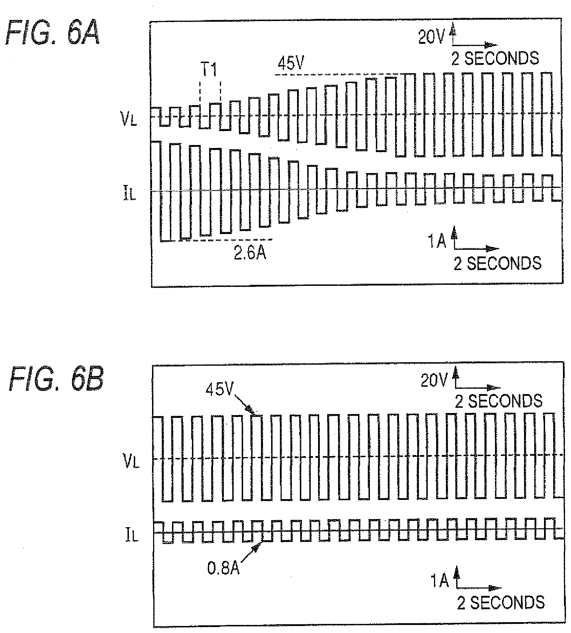

Figs. 6A and 6B are time charts showing an operating state after the DC period $\phi_{DC}$ of the discharge lamp lighting circuit 100. An axis of ordinate and an axis of abscissa in each of Figs. 6A and 6B are properly enlarged and reduced for easy understanding. Moreover, each waveform shown in Figs. 6A and 6B is also simplified for the easy understanding. Figs. 6A and 6B show a waveform in a run-up process and stationary lighting, respectively.

4. Run-up

With a growth of the arc discharge, a light output of the discharge lamp 4 is raised. A rise in the light output is determined by the standards, and the control circuit 10 monitors the first output voltage Vo1, the second output voltage Vo2 and the lamp current IL and regulates a duty ratio of ON/OFF operations of the first switching device M1 and the second switching device M2 through a feedback in order to obtain a light output (power) matched with the standards. The discharge lamp lighting circuit 100 temporarily supplies a higher overpower than a rated power and then stabilizes the lamp voltage and the lamp current IL to be 45V and 0.8A respectively, thereby approximating to the rated power (35W) in order to rapidly raise the light output of the discharge lamp 4 for a run-up period (Fig. 6A).

5. Stationary Lighting

When the light output of the discharge lamp 4 is stabilized through the run-up process, the power to be supplied to the discharge lamp 4 is stabilized to have the rated value of 35W (Fig. 6B). The waveforms of the driving voltage VL and the lamp current IL shown in Figs. 6A and 6B are simplified to be easily seen, and actually have frequencies of 250 Hz to 750 Hz. Although it is assumed that the current limiting function and the temperature derating function described with reference to Figs. 1 to 4 are operated in the stationary lighting state, moreover, it is a matter of course that they may be operated in another state (until the stationary lighting state is brought after the ON operation).

The operation of the discharge lamp lighting circuit 100 according to the embodiment has been described above. The discharge lamp lighting circuit 100 has the following advantages.

(1) According to the discharge lamp lighting circuit 100 in accordance with the embodiment, the temperature T of the discharge lamp lighting circuit 100 is converted into the state current Is by only one temperature information converting circuit 50. In other words, only one state current Is depending on the temperature T is generated. In the discharge lamp lighting circuit 100, the state current Is is caused to act on the reference voltage to be used in each of the temperature derating function and the current limiting function, thereby transferring information about the temperature T to each of the functions. More specifically, the temperature information converting circuit 50 is shared by the temperature derating function and the current limiting function. As compared with the related-art structure in which a circuit for detecting a temperature is provided separately for each function, accordingly, it is possible to reduce a circuit scale corresponding to a shared portion in which the temperature T is converted into the state current Is. Thus, it is possible to contribute to a reduction in a cost.

(2) In the discharge lamp lighting circuit 100 according to the embodiment, moreover, the temperature characteristic of the reference voltage required for the current limiting function (for example, the curve 114 in Fig. 4) is different from the temperature characteristic of the reference voltage required for the temperature derating function (for example, the sink current Io in the Equation 8). However, the respective temperature characteristics are implemented by properly setting the resistance values of the first resistor R1, the second resistor R2, the third resistor R3, the fourth resistor R4 and the fifth resistor R5. In other words, the state current Is is not processed in the portion in which the control circuit 10 is integrated for each temperature characteristic but the state current Is is maintained as it is and the resistance values of the resistors provided on the outside of the integrated portion are regulated to implement the respective temperature characteristics. First of all, consequently, it is possible to contribute to a reduction in a circuit scale without requiring to provide the integrated circuit portion for processing the state current Is for each of the temperature characteristics. Moreover, it is possible to regulate the temperature characteristic by varying the resistance value on the outside of the control circuit 10. Therefore, it is possible to finely control the temperature characteristic after the control circuit 10 is integrated.

(3) In the discharge lamp lighting circuit 100 according to the embodiment, furthermore, the converting rule in the temperature information converting circuit 50 is set to be a rule for converting the coefficient of proportionality of the temperature T and the state current Is to be varied depending on the temperature T. Consequently, it is also possible to correspond to a complicated temperature characteristic such as a nonlinear temperature characteristic. Moreover, the converting rule is determined to cancel a change in the resistance value of the first ON resistor $R_{M1}$ of the first switching device M1 to which the first switching current $I_{M1}$ flows depending on the temperature T. As seen in Fig. 4, therefore, the threshold current of the switching current is maintained to be almost equal to the maximum current $I_{M\_MAX}$ even if the ON resistance $R_M$ is varied depending on the temperature T. In other words, the threshold current can be set to be almost constant without depending on the temperature T.

(4) Since the discharge lamp lighting circuit 100 according to the embodiment is mounted on a lighting device for a vehicle, moreover, a comparatively high temperature is obtained. In the situation, the discharge lamp lighting circuit 100 has the temperature derating function and the current limiting function in which a change depending on a temperature is compensated. Therefore, a safety of the discharge lamp lighting circuit 100 is higher than that of the related-art discharge lamp lighting circuit.

(5) In the discharge lamp lighting circuit 100 according to the embodiment, furthermore, it is apparent that a management over a whole temperature range is carried out in the current limiting function and a management within a range of a high temperature is carried out in the temperature derating function. In other words, the two functions having different temperature ranges to be managed are implemented based on single temperature information (the state current Is).

The invention has been described above based on the embodiment. It will be understood to the skilled in the art that the embodiment is illustrative, and various variants can be applied to a combination of the respective components or the respective processing processes and are also included in the scope of the invention.

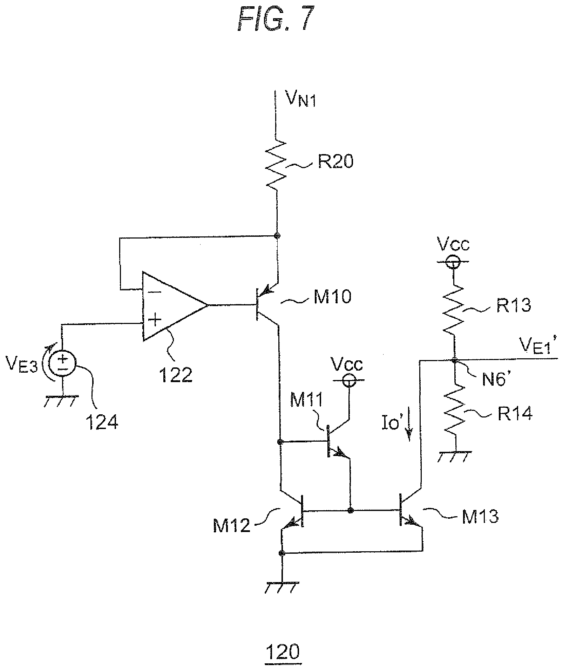

Description will be given to a variant of the temperature derating regulating circuit 86. Fig. 7 is a circuit diagram showing a structure of a temperature derating regulating circuit 120 according to the variant. The temperature derating regulating circuit 120 includes a twentieth resistor R20, a fifth differential amplifying circuit 122, a first voltage source 124, a tenth switching device M10, an eleventh switching device M11, a twelfth switching device M12, a thirteenth switching device M13, a thirteenth resistor R13, and a fourteenth resistor R14.

The first voltage dividing point voltage $V_{N1}$ is applied to one of ends of the twentieth resistor R20. The other end of the twentieth resistor R20 is connected to an emitter of the tenth switching device M10 to be a pnp type bipolar transistor and an inverting input terminal of the fifth differential amplifying circuit 122. A third reference voltage $V_{E3}$ is applied from the first voltage source 124 to a non-inverting input terminal of the fifth differential amplifying circuit 122. An output terminal of the fifth differential amplifying circuit 122 is connected to a base of the tenth switching device M10. A collector of the tenth switching device M10 is connected to a collector of the twelfth switching device M12 to be an npn type bipolar transistor and a base of the eleventh switching device M11 to be the npn type bipolar transistor. A base of the twelfth switching device M12 is connected to a base of the thirteenth switching device M13 to be the npn type bipolar transistor in common. An emitter of the twelfth switching device M12 is connected to an emitter of the thirteenth switching device M13 and is grounded. A source voltage Vcc is applied to a collector of the eleventh switching device M11. An emitter of the eleventh switching device M11 is connected to the base of the twelfth switching device M12. A collector of the thirteenth switching device M13 is connected to a sixth connecting node N6' of the thirteenth resistor R13 and the fourteenth resistor R14. A voltage of the sixth connecting node N6' is supplied as a first reference voltage $V_{E1}'$ to an error amplifier 90.

According to the variant, when the first voltage dividing point voltage $V_{N1}$ is equal to or higher than the third reference voltage $V_{E3}$, a sink current Io' is started to flow. When the sink current Io' flows, the first reference voltage $V_{E1}'$ of the sixth connecting node N6' is dropped. When the first voltage dividing point voltage $V_{N1}$ is higher, moreover, the sink current Io' is increased corresponding to the drop in the first reference voltage $V_{E1}'$. Consequently, a temperature derating function can be implemented.

In the embodiment, the description has been given to the case in which the temperature derating regulating circuit 86 is provided on the reference voltage side of the error amplifier 90 in order to implement the temperature derating function. Apparently, it has been disclosed that the regulation based on the derating information is not carried out over the power information signal Sp side (the control line side) of the error amplifier 90 but the regulation based on the derating information is carried out over the reference voltage side of the error amplifier 90. Although the description has been given by taking, as an example, the temperature derating function as the derating function to act on the reference voltage side of the error amplifier 90 in the embodiment, the invention is not restricted thereto.

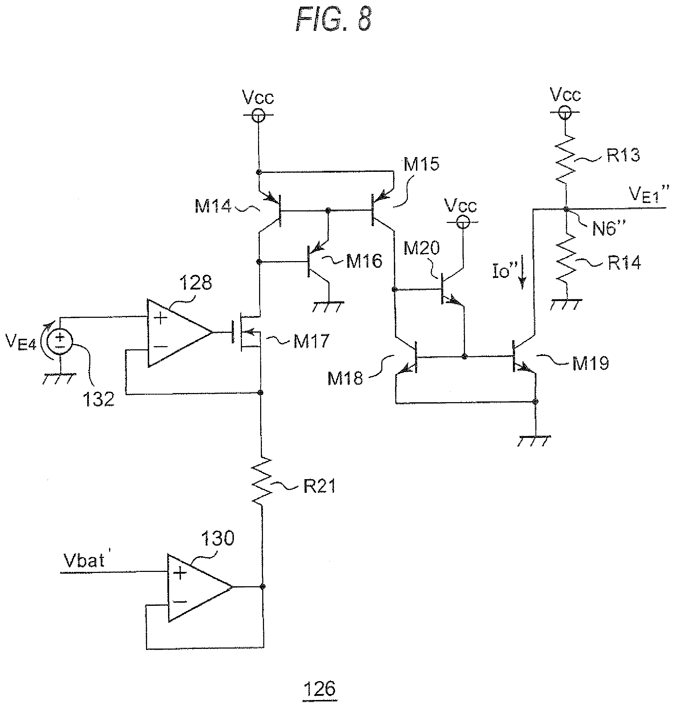

Fig. 8 is a circuit diagram showing a structure of a battery voltage derating regulating circuit 126 in relation to the derating function of a battery voltage Vbat. The battery voltage derating regulating circuit 126 supplies a first reference voltage VE1" to a non-inverting input terminal of the error amplifier 90 in place of the temperature derating regulating circuit 86. The battery voltage derating regulating circuit 126 includes a fourteenth switching device M14, a fifteenth switching device M15, a sixteenth switching device M16, a seventeenth switching device M17, an eighteenth switching device M18, a nineteenth switching device M19, a twentieth switching device M20, a sixth differential amplifying circuit 128, a buffer 130, a second voltage source 132, a twenty-first resistor R21, a thirteenth resistor R13, and a fourteenth resistor R14.

The source voltage Vcc is applied to an emitter of the fourteenth switching device M14 to be a pnp type bipolar transistor and an emitter of the fifteenth switching device M15 to be the pnp type bipolar transistor. The fourteenth switching device M14 and the fifteenth switching device M15 have bases connected in common, and the bases are connected to an emitter of the sixteenth switching device M16 to be the pnp type bipolar transistor. The sixteenth switching device M16 has a collector grounded and has a base connected to a collector of the fourteenth switching device M14. The collector of the fourteenth switching device M14 is connected to a drain of the seventeenth switching device M17 to be an N-channel MOSFET. A fourth reference voltage $V_{E4}$ is applied from the second voltage source 132 to a non-inverting input terminal of the sixth differential amplifying circuit 128. The sixth differential amplifying circuit 128 has an output terminal connected to a gate of the seventeenth switching device M17 and has an inverting input terminal connected to a source of the seventeenth switching device M17. The source of the seventeenth switching device M17 is connected to one of ends of the twenty-first resistor R21. A voltage which is equivalent to the battery voltage Vbat (which will be hereinafter referred to as a battery equivalent voltage Vbat') is buffered by the buffer 130 and is thus applied to the other end of the twenty-first resistor R21.

The fifteenth switching device M15 has a collector connected to a base of the twentieth switching device M20 to be an npn type bipolar transistor and a collector of the eighteenth switching device M18 to be the npn type bipolar transistor. A base of the eighteenth switching device M18 is connected to a base of the nineteenth switching device M19 to be the npn type bipolar transistor, and furthermore, is also connected to an emitter of the twentieth switching device M20. An emitter of the eighteenth switching device M18 and that of the nineteenth switching device M19 are grounded together. The source voltage Vcc is applied to a collector of the twentieth switching device M20. The nineteenth switching device M19 has a collector connected to a sixth connecting node N6" of the thirteenth resistor R13 and the fourteenth resistor R14.

In the battery voltage derating regulating circuit 126, when the battery equivalent voltage Vbat' is lower than the preset fourth reference voltage $V_{E4}$, a sink current Io" is started to flow to the nineteenth switching device M19. When the sink current Io" flows, the first reference voltage $V_{E1}$" of the sixth connecting node N6" is dropped. When the battery equivalent voltage Vbat' is lower, moreover, the sink current Io" is increased corresponding to the drop in the first reference voltage $V_{E1}$". Consequently, the derating function of the battery voltage Vbat can be implemented.

Although the description has been given to the case in which the sink current Io is sunk from the sixth connecting node N6 to regulate the temperature derating function in the temperature derating regulating circuit 86 in the embodiment, the invention is not restricted thereto but the temperature derating function may be regulated by sourcing a current or the temperature derating function may be regulated by a combination of the sink and source of the current.

Although the description has been given to the case in which the positive output voltages Vo1 and Vo2 are generated and applied to the discharge lamp 4 (which is referred to as positive lighting) in the embodiment, it is also possible to generate negative output voltages Vo1 and Vo2, thereby driving the discharge lamp 4 (which is referred to as negative lighting). In this case, it is preferable to invert the directions of the first rectifier diode D1 and the second rectifier diode D2, the polarities of the respective secondary windings of the first and second transformers 14 and 16, and the directions of the switching devices M1 and M2 connected to the secondary winding side of the respective transformers in Fig. 1.

It is also possible to use a microcomputer in the control circuit 10 of the discharge lamp lighting circuit 100 according to the embodiment or a part thereof.

Although the description has been given by tasking, as an example, the discharge lamp lighting circuit 100 for driving the discharge lamp 4 for a vehicle in the embodiment, the use of the invention is not restricted thereto. For example, the invention can be widely applied to a lighting circuit of a light source such as an LED with a lamp current to be a direct current to which the operating sequence cannot be applied, particularly, a light source lighting circuit for carrying out a control based on information indicative of an environment of an operation.

The logical values of the high and low levels of the signal are set as illustrative in the circuit described in the embodiment, and can be freely changed through a proper inversion by means of an inverter.

Although the invention has been described by using specific words and phrases based on the embodiment, the embodiment only shows the principle and application of the invention and many variants and changes in the arrangement can be made without departing from the thought of the invention prescribed in claims.

**Claims**

1. Light source lighting circuit (100) comprising:

   a) a driving voltage generating circuit (12) configured to supply a driving voltage (VL) to a light source (4); and
   b) a control circuit (10) configured to control the driving voltage generating circuit (12),
   the control circuit (10) including:

   b1) a plurality of processing circuits (54, 58) configured to control (S1-S4) the driving voltage generating circuit (12) using corresponding control voltages ($V_{E1}$, $V_{E2}$) respectively,
   b2) an environment information converting circuit (50) configured to convert information indicative of an environment of an operation into a state current ($I_S$) based on a predetermined converting rule, and
   **characterized by**
   b3) a control voltage generating circuit (52) configured to generate the control voltages ($V_{E1}$, $V_{E2}$) for the processing circuits and configured to regulate each of the control voltages ($V_{E1}$, $V_{E2}$) by using the state current ($I_S$),
   b4) wherein for at least one of the control voltages ($V_{E1}$, $V_{E2}$), the control voltage generating circuit (52) is configured to divide a reference voltage ($V_{CC}$) by a resistive element (R1, R2; R3, R4) and set, as a control voltage ($V_{E1}$, $V_{E2}$), a voltage ($V_{N1}$, $V_{N2}$) on a voltage dividing point (N1; N2) which is obtained by causing the state current ($I_S$) to flow to the voltage dividing point (N1; N2).

2. The light source lighting circuit according to claim 1,
   wherein the information indicative of the environment of the operation is a temperature of the light source lighting circuit (100), and
   wherein the converting rule is a rule in which a conversion is performed in such a manner that a coefficient of proportionality of a temperature and the state current ($I_S$) is varied depending on the temperature.

3. The light source lighting circuit according to claim 2,
   wherein the driving voltage generating circuit (12) includes a switching regulator (CONV1, CONV2) configured to generate the driving voltage (VL), and the control circuit (10) includes an output regulating circuit (60) configured to control a duty ratio of ON/OFF of a switching device (M1, M2) in the switching regulator (CONV1, CONV2),
   wherein one of the processing circuits is a current limiting circuit (58) configured to perform a control for limiting a switching current ($I_{M1}$, $I_{M2}$) flowing to the switching device (M1, M2),
   wherein one of the control voltages is a control voltage ($V_{E2}$) of the current limiting circuit (58), the control voltage serving as a voltage for giving a threshold current of the switching current ($I_{M1}$, $I_{M2}$), and the current limiting circuit (58) causes the output regulating circuit (60) to turn OFF the switching device (M1, M2) when a voltage drop ($V_{M1}$, $V_{M2}$) generated in a resistive element ($R_{M1}$, $R_{M2}$) to which the switching current ($I_{M1}$, $I_{M2}$) flows exceeds the control voltage ($V_{E2}$), and
   wherein the converting rule is determined to cancel a change in a resistance value of the resistive element ($R_{M1}$, $R_{M2}$) to which the switching current ($I_{M1}$, $I_{M2}$) flows depending on a temperature.

4. The light source lighting circuit according to claim 2,
   wherein the driving voltage generating circuit (12) includes a switching regulator (CONV1, CONV2) configured to generate the driving voltage (VL), and the control circuit (10) includes an output regulating circuit (60) configured to control a duty ratio of ON/OFF of a switching device (M1, M2) in the switching regulator (CONV1, CONV2) based on an error signal ($S_{err}$),
   wherein one of the processing circuits is an error amplifying circuit (54) configured to compare an electrical state of a light source with a target state, thereby generating the error signal ($S_{err}$),
   wherein one of the control voltages is a control voltage ($V_{E1}$) of the error amplifying circuit (54), the control voltage ($V_{E1}$) serving as a voltage indicative of the target state, and the error amplifying circuit (54) generates the error signal ($S_{err}$) corresponding to a difference between a voltage indicative of the electrical state of the light source and the control voltage ($V_{E1}$), and
   wherein the control voltage generating circuit (52) is configured to regulate the control voltage ($V_{E1}$) of the error amplifying circuit (54) in order to reduce a power to be supplied to the light source when a temperature of the light source lighting circuit (100) is higher than a predetermined threshold temperature.

5. The light source lighting circuit according to claim 2,
   wherein the driving voltage generating circuit (12) includes a switching regulator (CONV1, CONV2) configured to generate the driving voltage (VL), and the control circuit (10) includes an output regulating circuit (60) configured to control a duty ratio of ON/OFF of a switching device (M1, M2) in the switching regulator (CONV1, CONV2) based on an error signal ($S_{err}$),

wherein one of the processing circuits is a current limiting circuit (58) configured to perform a control for limiting a switching current ($I_{M1}$, $I_{M2}$) flowing to the switching device (M1, M2),

wherein another one of the processing circuits is an error amplifying circuit (54) configured to compare an electrical state of a light source with a target state, thereby generating the error signal ($S_{err}$),

wherein one of the control voltages is a first control voltage ($V_{E2}$) of the current limiting circuit (58), the first control voltage ($V_{E2}$) serving as a voltage for giving a threshold current of the switching current ($I_{M1}$, $I_{M2}$), and the current limiting circuit (58) causes the output regulating circuit (60) to turn OFF the switching device (M1, M2) when a voltage drop ($V_{M1}$, $V_{M2}$) generated in a resistive element ($R_{M1}$, $R_{M2}$) to which the switching current ($I_{M1}$, $I_{M2}$) flows exceeds the first control voltage ($V_{E2}$),

wherein another one of the control voltages is a second control voltage ($V_{E1}$) of the error amplifying circuit (54), the second control voltage serving as a voltage indicative of the target state, and the error amplifying circuit (54) generates the error signal ($S_{err}$) corresponding to a difference between a voltage indicative of the electrical state of the light source and the second control voltage,

wherein the converting rule is determined to cancel a change in a resistance value of the resistive element ($R_{M1}$, $R_{M2}$) to which the switching current (IL) flows depending on a temperature,

wherein the control voltage generating circuit (52) is configured to regulate the second control voltage ($V_{E1}$) in order to reduce a power to be supplied to the light source when a temperature of the light source lighting circuit (100) is higher than a predetermined threshold temperature, and

wherein the control voltage generating circuit (52) is configured to divide a reference voltage by the resistive element ($R_{M1}$, $R_{M2}$) and sets, as the first control voltage ($V_{E2}$), a voltage ($V_{N2}$) on a voltage dividing point (N2) which is obtained by causing the state current ($I_S$) to flow to the voltage dividing point (N2).


**Patentansprüche**

1. Lichtquellenbeleuchtungsschaltung (100), umfassend:

   a) eine Schaltung zur Treiberspannungserzeugung (12), die konfiguriert, eine Treiberspannung (VL) zu einer Lichtquelle (4) zu liefern; und
   b) eine Steuerschaltung (10), die konfiguriert ist, die Schaltung zur Treiberspannungserzeugung (12) zu steuern,

   wobei der Steuerstromkreis (10) einschließt:

   b1) eine Vielzahl von Verarbeitungsschaltungen (54, 58), die konfiguriert sind, jeweils die Schaltung zur Treiberspannungserzeugung (12) unter Verwendung der entsprechenden Steuerspannungen ($V_{E1}$, $V_{E2}$) zu steuern (S1-S4),
   b2) eine Schaltung zur Umgebungsinformationskonvertierung (50), die konfiguriert ist, Information, die für eine Umgebung einer Operation indikativ ist, in einen Zustandsstrom ($I_S$) auf Grundlage von einer vorgegebenen Konvertierungsregel zu konvertieren, und
   **gekennzeichnet durch**
   b3) eine Schaltung zur Steuerspannungserzeugung (52), die konfiguriert ist, Steuerspannungen ($V_{E1}$, $V_{E2}$) für die Verarbeitungsschaltungen zu erzeugen, und konfiguriert ist, jede der Steuerspannungen ($V_{E1}$, $V_{E2}$) unter Verwendung des Zustandstroms ($I_S$) zu regeln,
   b4) wobei für mindestens eine der Steuerspannungen ($V_{E1}$, $V_{E2}$) die Schaltung zur Steuerspannungserzeugung (52) konfiguriert ist, eine Referenzspannung ($V_{cc}$) durch ein Widerstandselement (R1, R2; R3, R4) zu teilen und als eine Steuerspannung ($V_{E1}$, $V_{E2}$) eine Spannung ($V_{N1}$, $V_{N2}$) an einem Spannungsteilungspunkt (N1; N2) einzustellen, die erhalten wird, in dem der Zustandsstrom ($I_S$) veranlasst wird, zu dem Spannungsteilungspunkt (N1; N2) zu fließen.

2. Lichtquellenbeleuchtungsschaltung nach Anspruch 1,

   wobei die Information, die für die Umgebung der Operation indikativ ist, eine Temperatur der Lichtquellenbeleuchtungsschaltung (100) ist, und
   wobei die Konvertierungsregel eine Regel ist, bei der eine Konvertierung so durchgeführt wird, dass ein Proportionalitätskoeffizient einer Temperatur und der Zustandsstrom ($I_S$) in Abhängigkeit von der Temperatur variiert werden.

3. Lichtquellenbeleuchtungsschaltung nach Anspruch 2,

wobei die Schaltung zur Treiberspannungserzeugung (12) einen Schaltregler (CONV1, CONV2) einschließt, der konfiguriert ist, die Treiberspannung (VL) zu erzeugen, und wobei die Steuerschaltung (10) eine Ausgaberegelschaltung (60) einschließt, die konfiguriert ist, ein Tastverhältnis EIN/AUS eines Schalters (M1, M2) in dem Schaltregler (CONV1, CONV2) zu steuern,
wobei eine der Verarbeitungsschaltungen eine Strombegrenzungsschaltung (58) ist, die konfiguriert ist, um eine Steuerung zur Begrenzung eines Schaltstroms ($I_{M1}$, $I_{M2}$), der zu der Schalteinrichtung (M1, M2) fließt, durchzuführen,
wobei eine der Steuerspannungen eine Steuerspannung ($V_{E2}$) der Strombegrenzungsschaltung (58) ist, wobei die Steuerspannung als eine Spannung dient, um einen Schwellenstrom des Schaltstroms ($I_{M1}$, $I_{M2}$) zu erzeugen, und wobei die Strombegrenzungsschaltung (58) die Ausgaberegelschaltung (60) veranlasst, die Schalteinrichtung (M1, M2) abzuschalten, wenn ein Spannungsabfall ($V_{M1}$, $V_{M2}$), der in einem Widerstandselement ($R_{M1}$, $R_{M2}$) erzeugt wird, zu dem der Schaltstrom ($I_{M1}$, $I_{M2}$) fließt, die Steuerspannung ($V_{E2}$) überschreitet, und
wobei die Konvertierungsregel bestimmt wird, um eine Änderung in einem Widerstandswert des Widerstandselements ($R_{M1}$, $R_{M2}$), zu dem der Schaltstrom ($I_{M1}$, $I_{M2}$) fließt, in Abhängigkeit von einer Temperatur aufzuheben.

4. Lichtquellenbeleuchtungsschaltung nach Anspruch 2,

wobei die Schaltung zur Treiberspannungserzeugung (12) einen Schaltregler (CONV1, CONV2) einschließt, der konfiguriert ist, die Treiberspannung (VL) zu erzeugen, und wobei die Steuerschaltung (10) eine Ausgaberegelschaltung (60) einschließt, die konfiguriert ist, um ein Tastverhältnis EIN/AUS einer Schalteinrichtung (M1, M2) in dem Schaltregler (CONV1, CONV2) auf Grundlage von einem Fehlersignal ($S_{err}$) zu steuern,
wobei eine der Verarbeitungsschaltungen eine Fehlerverstärkerschaltung (54) ist, die konfiguriert ist, einen elektrischen Zustand einer Lichtquelle mit einem Zielzustand zu vergleichen, wodurch das Fehlersignal ($S_{err}$) erzeugt wird,
wobei eine der Steuerspannungen eine Steuerspannung ($V_{E1}$) der Fehlerverstärkerschaltung (54) ist, wobei die Steuerspannung ($V_{E1}$) als eine Spannung dient, die indikativ für den Zielzustand ist, und wobei die Fehler-verstärkerschaltung (54) das Fehlersignal ($S_{err}$) erzeugt, das einer Differenz zwischen einer Spannung, die für den elektrischen Zustand der Lichtquelle indikativ ist, und der Steuerspannung ($V_{E1}$) entspricht, und
wobei die Schaltung zur Steuerspannungserzeugung (52) konfiguriert ist, die Steuerspannung ($V_{E1}$) der Fehlerverstärkerschaltung (54) zu regeln, um die Leistung zu verringern, die zu der Lichtquelle zu liefern ist, wenn eine Temperatur der Lichtquellenbeleuchtungsschaltung (100) höher als eine vorgegebene Schwellentemperatur ist.

5. Lichtquellenbeleuchtungsschaltung nach Anspruch 2,

wobei die Schaltung zur Treiberspannungserzeugung (12) einen Schaltregler (CONV1, CONV2) einschließt, der konfiguriert ist, die Treiberspannung (VL) zu erzeugen, und wobei die Steuerschaltung (10) eine Ausgaberegelschaltung (60) einschließt, die konfiguriert ist, um ein Tastverhältnis EIN/AUS einer Schalteinrichtung (M1, M2) in dem Schaltregler (CONV1, CONV2) auf Grundlage von einem Fehlersignal ($S_{err}$) zu steuern,
wobei eine der Verarbeitungsschaltungen eine Strombegrenzungsschaltung (58) ist, die konfiguriert ist, um eine Steuerung zur Begrenzung eines Schaltstroms ($I_{M1}$, $I_{M2}$), der zu der Schalteinrichtung (M1, M2) fließt, durchzuführen,
wobei eine andere der Verarbeitungsschaltungen eine Fehlerverstärkerschaltung (54) ist, die konfiguriert ist, einen elektrischen Zustand einer Lichtquelle mit einem Zielzustand zu vergleichen, wodurch das Fehlersignal ($S_{err}$) erzeugt wird,
wobei eine der Steuerspannungen eine erste Steuerspannung ($V_{E2}$) der Strombegrenzungsschaltung (58) ist, wobei die erste Steuerspannung ($V_{E2}$) als eine Spannung dient, um einen Schwellenstrom des Schaltstroms ($I_{M1}$, $I_{M2}$) zu erzeugen, und wobei die Strombegrenzungsschaltung (58) die Ausgaberegelschaltung (60) veranlasst, die Schalteinrichtung (M1, M2) abzuschalten, wenn ein Spannungsabfall ($V_{M1}$, $V_{M2}$), der in einem Widerstandselement ($R_{M1}$, $R_{M2}$) erzeugt wird, zu dem der Schaltstrom ($I_{M1}$, $I_{M2}$) fließt, die erste Steuerspannung ($V_{E2}$) überschreitet,
wobei eine andere der Steuerspannungen eine zweite Steuerspannung ($V_{E1}$) der Fehlerverstärkerschaltung (54) ist, wobei die zweite Steuerspannung als eine Spannung dient, die für den Zielzustand indikativ ist, und wobei die Fehlerverstärkerschaltung (54) das Fehlersignal ($S_{err}$) erzeugt, das einer Differenz zwischen einer Spannung, die für den elektrischen Zustand der Lichtquelle indikativ ist, und der zweiten Steuerspannung entspricht,

wobei die Konvertierungsregel bestimmt wird, um eine Änderung in einem Widerstandswert des Widerstandselements ($R_{M1}$, $R_{M2}$), zu dem der Schaltstrom (IL) fließt, in Abhängigkeit von einer Temperatur aufzuheben,

wobei die Schaltung zur Steuerspannungserzeugung (52) konfiguriert ist, die zweite Steuerspannung ($V_{E1}$) zu regeln, um eine Leistung zu verringern, die der Lichtquelle zuzuführen ist, wenn eine Temperatur der Lichtquellenbeleuchtungsschaltung (100) höher als eine vorgegebene Schwellentemperatur ist, und

wobei die Schaltung zur Steuerspannungserzeugung (52) konfiguriert ist, eine Referenzspannung durch das Widerstandselement ($R_{M1}$, $R_{M2}$) zu teilen und als die erste Steuerspannung ($V_{E2}$) eine Spannung ($V_{N2}$) an einem Spannungsteilungspunkt (N2) einstellt, die erhalten wird, indem der Zustandsstrom ($I_S$) veranlasst wird, zu dem Spannungsteilungspunkt (N2) zu fließen.

**Revendications**

1. Circuit d'éclairage à source lumineuse (100), comprenant :

   a) un circuit de génération de tension d'excitation (12) configuré pour fournir une tension d'excitation (VL) à une source lumineuse (4) ; et
   b) un circuit de commande (10) configuré pour commander le circuit de génération de tension d'excitation (12),

   le circuit de commande (10) incluant :

   b1) une pluralité de circuits de traitement (54, 58) configurés pour commander (S1-S4) le circuit de génération de tension d'excitation (12) en utilisant des tensions de commande correspondantes ($V_{E1}$, $V_{E2}$) respectivement,
   b2) un circuit de conversion d'informations d'environnement (50) configuré pour convertir des informations indicatives d'un environnement d'un fonctionnement en un courant d'état ($I_S$) sur la base d'une règle de conversion prédéterminée, et
   **caractérisé par**
   b3) un circuit de génération de tension de commande (52) configuré pour générer les tensions de commande ($V_{E1}$, $V_{E2}$) pour les circuits de traitement et configuré pour réguler chacune des tensions de commande ($V_{E1}$, $V_{E2}$) en utilisant le courant d'état ($I_S$),
   b4) dans lequel, pour au moins l'une des tensions de commande ($V_{E1}$, $V_{E2}$), le circuit de génération de tension de commande (52) est configuré pour diviser une tension de référence ($V_{cc}$) par un élément résistif (R1, R2 ; R3, R4) et régler, en tant que tension de commande ($V_{E1}$, $V_{E2}$), une tension ($V_{N1}$, $V_{N2}$) sur un point de division de tension (N1; N2) qui est obtenu en amenant le courant d'état ($I_S$) à s'écouler vers le point de division de tension (N1 ; N2).

2. Circuit d'éclairage à source lumineuse selon la revendication 1,
   dans lequel les informations indicatives de l'environnement du fonctionnement sont une température du circuit d'éclairage à source lumineuse (100), et
   dans lequel la règle de conversion est une règle dans laquelle une conversion est réalisée de manière telle qu'un coefficient de proportionnalité d'une température et du courant d'état ($I_S$) soit varié en fonction de la température.

3. Circuit d'éclairage à source lumineuse selon la revendication 2,
   dans lequel le circuit de génération de tension d'excitation (12) inclut un régulateur de commutation (CONV1, CONV2) configuré pour générer la tension d'excitation (VL), et le circuit de commande (10) inclut un circuit de régulation de sortie (60) configuré pour commander un rapport d'utilisation de marche/arrêt d'un dispositif de commutation (M1, M2) dans le régulateur de commutation (CONV1, CONV2),
   dans lequel l'un des circuits de traitement est un circuit limiteur de courant (58) configuré pour réaliser une commande pour limiter un courant de commutation ($I_{M1}$, $I_{M2}$) s'écoulant vers le dispositif de commutation (M1, M2),
   dans lequel l'une des tensions de commande est une tension de commande ($V_{E2}$) du circuit limiteur de courant (58), la tension de commande servant de tension pour produire un courant de seuil du courant de commutation ($I_{M1}$, $I_{M2}$), et le circuit limiteur de courant (58) amène le circuit de régulation de sortie (60) à éteindre le dispositif de commutation (M1, M2) lorsqu'une chute de tension ($V_{M1}$, $V_{M2}$) générée dans un élément résistif ($R_{M1}$, $R_{M2}$) vers lequel le courant de commutation ($I_{M1}$, $I_{M2}$) s'écoule dépasse la tension de commande ($V_{E2}$), et
   dans lequel la règle de conversion est déterminée pour annuler un changement d'une valeur de résistance de l'élément résistif ($R_{M1}$, $R_{M2}$) vers lequel le courant de commutation (IM1, IM2) s'écoule en fonction d'une température.

4. Circuit d'éclairage à source lumineuse selon la revendication 2,
dans lequel le circuit de génération de tension d'excitation (12) inclut un régulateur de commutation (CONV1, CONV2) configuré pour générer la tension d'excitation (VL), et le circuit de commande (10) inclut un circuit de régulation de sortie (60) configuré pour commander un rapport d'utilisation de marche/arrêt d'un dispositif de commutation (M1, M2) dans le régulateur de commutation (CONV1, CONV2) sur la base d'un signal d'erreur ($S_{err}$),
dans lequel l'un des circuits de traitement est un circuit d'amplification d'erreur (54) configuré pour comparer un état électrique d'une source lumineuse à un état cible, ainsi générant le signal d'erreur ($S_{err}$),
dans lequel l'une des tensions de commande est une tension de commande ($V_{E1}$) du circuit d'amplification d'erreur (54), la tension de commande ($V_{E1}$) servant de tension indicative de l'état cible, et le circuit d'amplification d'erreur (54) génère le signal d'erreur ($S_{err}$) correspondant à une différence entre une tension indicative de l'état électrique de la source lumineuse et la tension de commande ($V_{E1}$), et
dans lequel le circuit de génération de tension de commande (52) est configuré pour réguler la tension de commande ($V_{E1}$) du circuit d'amplification d'erreur (54) afin de réduire une puissance destinée à être fournie à la source lumineuse lorsqu'une température du circuit d'éclairage à source lumineuse (100) est supérieure à une température de seuil prédéterminée.

5. Circuit d'éclairage à source lumineuse selon la revendication 2,
dans lequel le circuit de génération de tension d'excitation (12) inclut un régulateur de commutation (CONV1, CONV2) configuré pour générer la tension d'excitation (VL), et le circuit de commande (10) inclut un circuit de régulation de sortie (60) configuré pour commander un rapport d'utilisation de marche/arrêt d'un dispositif de commutation (M1, M2) dans le régulateur de commutation (CONV1, CONV2) sur la base d'un signal d'erreur ($S_{err}$),
dans lequel l'un des circuits de traitement est un circuit limiteur de courant (58) configuré pour réaliser une commande pour limiter un courant de commutation ($I_{M1}$, $I_{M2}$) s'écoulant vers le dispositif de commutation (M1, M2),
dans lequel un autre des circuits de traitement est un circuit d'amplification d'erreur (54) configuré pour comparer un état électrique d'une source lumineuse à un état cible, ainsi générant le signal d'erreur ($S_{err}$),
dans lequel l'une des tensions de commande est une première tension de commande ($V_{E2}$) du circuit limiteur de courant (58), la première tension de commande ($V_{E2}$) servant de tension pour produire un courant de seuil du courant de commutation ($I_{M1}$, $I_{M2}$), et le circuit limiteur de courant (58) amène le circuit de régulation de sortie (60) à éteindre le dispositif de commutation (M1, M2) lorsqu'une chute de tension ($V_{M1}$, $V_{M2}$) générée dans un élément résistif ($R_{M1}$, $R_{M2}$) vers lequel le courant de commutation ($I_{M1}$, $I_{M2}$) s'écoule dépasse la première tension de commande ($V_{E2}$),
dans lequel une autre des tensions de commande est une seconde tension de commande ($V_{E1}$) du circuit d'amplification d'erreur (54), la seconde tension de commande servant de tension indicative de l'état cible, et le circuit d'amplification d'erreur (54) génère le signal d'erreur ($S_{err}$) correspondant à une différence entre une tension indicative de l'état électrique de la source lumineuse et la seconde tension de commande,
dans lequel la règle de conversion est déterminée pour annuler un changement d'une valeur de résistance de l'élément résistif ($R_{M1}$, $R_{M2}$) vers lequel le courant de commutation (IL) s'écoule en fonction d'une température,
dans lequel le circuit de génération de tension de commande (52) est configuré pour réguler la seconde tension de commande ($V_{E1}$) afin de réduire une puissance destinée à être fournie à la source lumineuse lorsqu'une température du circuit d'éclairage à source lumineuse (100) est supérieure à une température de seuil prédéterminée, et
dans lequel le circuit de génération de tension de commande (52) est configuré pour diviser une tension de référence par l'élément résistif ($R_{M1}$, $R_{M2}$) et règle, en tant que première tension de commande ($V_{E2}$), une tension ($V_{N2}$) sur un point de division de tension (N2) qui est obtenu en amenant le courant d'état ($I_S$) à s'écouler vers le point de division de tension (N2).

*FIG. 1*

FIG. 2

FIG. 3

# FIG. 4

## FIG. 5

FIG. 6A

FIG. 6B

## FIG. 7

120

*FIG. 8*

126

**EP 2 244 537 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11329777 A
- US 20020109467 A1
- US 4677346 A